# EUROPEAN PATENT APPLICATION

(11) **EP 2 639 033 A1**
(43) Date of publication of application: **18.09.2013**
(21) Application number: 11840602.4
(22) Date of filing: 09.11.2011
(51) Int. Cl.: B29C 39/24, G02B 3/00, B29L 11/00

(54) **WAFER LENS PRODUCTION METHOD**

(30) Priority: 09.11.2010 JP 2010250496
(71) Applicant: Konica Minolta, Inc., Tokyo 100-7015 (JP)
(72) Inventor: EGURO, Kouichi, Hachioji-shi Tokyo 192-8505 (JP); SARUYA, Nobuhiro, Hachioji-shi Tokyo 192-8505 (JP)
(74) Representative: Henkel, Breuer & Partner
(86) International application number: PCT/JP2011/075869
(87) International publication number: WO 2012/063882

(57) **Abstract**

The purpose of the present invention is to provide a wafer lens production method capable of simply and precisely molding an optical surface while preventing damage to a substrate caused by mold release, when molding a lens surface or other optical surface on both surfaces of the substrate. A second molding surface (103a) is released from a second metal mold (42) be-fore a first molding surface (102a) is completely released from a first metal mold (41) and, as a result, a releasing force is applied at the same time to both the first and second molding surfaces (102a, 103a) of the substrate (101) in a state such that an uneven force could not be readily applied, enabling the prevention of damage to the substrate (101) at mold release even for comparative-ly thin substrates (101). In addition, the mold release occurs with the sections of the first and second molding surfaces (102a, 103a) that have not been released remaining in each, thereby enabling the simple and efficient production of a precise wafer lens (100) without requiring the provision of a separate step for protecting first and second optical surfaces (11d, 12d) on the opposite side at mold release.

## Description

### Technical Field

The present invention relates to a wafer lens manufacturing method. More particularly, the present invention relates to a method for manufacturing a wafer lens used in an image pickup lens and the like.

### Background Art

An exemplary method for manufacturing the wafer lens is to obtain a wafer lens to which a large number of two-dimensionally arranged optical surfaces are transferred by disposing fluid resin between a mold and a wafer, making the resin to cure by UV and the like and then separating a substrate (i.e., the wafer) from the mold (for example, see Patent Literatures 1 and 2). Such a wafer lens is usually formed by two transfer events, and a large number of lens surfaces which are molded on both upper and lower surfaces of the substrate.

However, in the method for manufacturing a wafer lens according to Patent Literatures 1 and 2, since comparatively large removing force, i.e.; separating force is applied to between the mold and the wafer lens when the molded wafer lens is separated from the mold, if the substrate is thin, the separating force is greater than the rigidity of the substrate and there is a possibility that the substrate is damaged. In addition, if molding and mold release have already been performed only on one surface of the substrate, a support member having a shape conforming the shape of a lens surface in order to support and protect the already molded lens surface and the like is required when molding and mold release are to be performed on the other surface of the substrate.

### Citation List

### Patent Literature

[PTL 1] Japanese Unexamined Patent Application Publication No. 2010-72665
[PTL 2] Japanese Unexamined Patent Application Publication No. 2009-226638

### Summary of Invention

An object of the present invention is to provide a method for manufacturing a wafer lens capable of simply and precisely molding optical surfaces while preventing damage to a substrate caused by mold release when molding lens surfaces or other optical surfaces on both surfaces of the substrate.

In order to achieve the above object, a method for manufacturing a wafer lens which includes a substrate, a first molding surface which is molded by resin on an upper side of a first substrate surface of the substrate and has a plurality of first optical surfaces, and a second molding surface which is molded by resin on an upper side of a second substrate surface of the substrate and has a plurality of second optical surfaces, the method comprising: a first process of applying resin to either one of the first substrate surface or a mold surface of the first mold which corresponds to the first molding surface and thus molding the first molding surface using the first mold; a second process of applying resin to either one of the second substrate surface or a mold surface of the second mold which corresponds to the second molding surface and thus molding the second molding surface using the second mold; a third process of separating the first mold from the first molding surface; and a fourth process of separating the second mold from the second molding surface, wherein the start of mold release of the second mold is at the same time or after the start of mold release of first mold and before the completion of mold release of the first mold in the third process. That is, in the fourth process, mold release of the second mold is started after mold release of the first mold is started. The mold release of the second mold may be completed after the mold release of the first mold is completed but, alternatively, may be completed at the same time or before the mold release of the first mold is completed.

According to the method for manufacturing the wafer lens described above, before the first molding surface is completely separated from the first mold, mold release of the second molding surface from the second mold is started. If mold release is performed on one side at a time like a related art method, since cured resin which forms the optical surface very firmly adheres to a mold surface, the substrate cannot withstand the force applied at the time of mold release and deformation damage will be caused in the substrate. In contrast, in the present invention, since separating force (removing force) which is the force with which each mold is separated from each molding surface can be applied at the same time on the first molding surface side and the second molding surface side, i.e., both surface sides, of the substrate, the force is well-balanced and uneven force is less likely to be applied to one surface or the other surface of the substrate. In this manner, it is possible to prevent damage to the substrate at the time of mold release even if the substrate is comparatively thin. Therefore, using a comparatively thin substrate for the wafer lens may increase a degree of freedom in design, may reduce the size of the product, and may produce a wafer lens which has an optical surface of high performance. Since the mold release is performed with unseparated portions remaining on the first and the second molding surfaces, the optical surface on the opposite side of the molding surface to be separated is precisely kept and, therefore, it is unnecessary to provide a support member for supporting and protecting the optical surface and the like. In this manner, it is unnecessary to separately provide a process of protecting the optical surface on the opposite side during the mold release, whereby a precise wafer lens can be produced simply and efficiently.

According to a concrete aspect of the present invention, the third process and the fourth process are made to proceed at least partially in parallel, in the method for manufacturing the wafer lens described above. In this case, when these processes are made to proceed in parallel or concurrently, distribution of the separating force applied to the substrate can be equally distributed to the first and the second molding surfaces, whereby the force applied to the substrate can be reduced and thus a thin substrate can be employed.

In another aspect of the present invention, mold release of the second mold is completed after mold release of the first mold is completed. In this case, the mold release of the first mold is performed at shifted timing from the mold release of the second mold.

In yet another aspect of the present invention, a period from the start until completion of the third process and a period from the start until completion of the fourth process are substantially the same. In this case, the mold release of the first molding surface and the mold release of the second molding surface are performed at substantially the same timing. Therefore, the mold release can be efficiently performed with damage which is so small that no influence is given as a product, and a thinner substrate may be employed.

In yet another aspect of the present invention, each of the first and the second molds includes mold locking portions at a plurality of places in an outer periphery on the substrate side. In the third and fourth processes, the first mold is separated from the first molding surface and the second mold is separated from the second molding surface by causing each of mold release members attached to the first and the second molds to be brought into contact with at least a part of the mold locking portions and displacing the mold locking portions via the mold release members in a direction spaced apart from the substrate. In this case, a mold release state (i.e., stages of progress of mold release) can be adjusted or controlled by a simple structure by providing a plurality of mold locking portions for the mold release in the first and the second molds. Especially it is possible to perform a mold release process gradually from a circumference toward the center of the substrate and the mold release can be completed without application of excessive force.

In yet another aspect of the present invention, the mold locking portions of the first mold and the mold locking portions of the second mold face each other via the substrate (including an extended plane of the substrate) and have contact surfaces inclined so as to be spaced apart from the substrate toward the outside in the radial direction of the first and the second molds, respectively. In this case, the first and the second molds have chamfered shapes without corners on the substrate side of outer peripheries and, therefore, the structure of the molds can be simplified while workability in mold release is kept.

In yet another aspect of the present invention, each of the mold release members includes a mold release locking portion which makes surface contact with each of the mold locking portions of the first and the second molds and transmits force. In this case, the separating force is transmitted via the surface and the mold release can be performed efficiently. If the mold locking portion is a mold inclined portion which includes an inclined contact surface and if the mold locking portion is a mold inclined portion which includes an inclined contact surface, force for mold release is transmitted via the inclined contact surface.

In yet another aspect of the present invention, at least one of the mold locking portions and the mold release locking portions are disposed at equal intervals on the outer peripheries of the first and the second molds. Here, for example, the mold locking portions can be disposed along the entire circumference of the outer periphery of the mold. In this case, since the mold release members are disposed in a well-balanced manner, the mold release state can be controlled simply and precisely.

In yet another aspect of the present invention, at least one of the mold locking portions and the mold release locking portions are disposed across substantially the entire circumference along the outer peripheries of the first and the second molds. In this case, by making the progress of the mold release be gradual, the mold release can be performed without producing any damage even if a thin substrate is used.

In yet another aspect of the present invention, portions at which the mold locking portions of the first and the second molds face each other and are force to increase spacing are sequentially moved along the outer peripheries of the first and the second molds. In this case, the mold release can be sequentially performed along the outer peripheries and local concentration of the separating force applied to the substrate can be reduced.

In yet another aspect of the present invention, in the third and fourth processes, the substrate is supported by a plurality of substrate support members provided on an outer periphery of the substrate. In this case, by supporting the substrate from a plurality of directions, it is possible to prevent the substrate from being greatly deformed by following either of the molds at the time of mold release. Therefore, after the mold release, the substrate can be kept stably between both the molds.

In yet another aspect of the present invention, the substrate support members are provided corresponding to at least one of the mold locking portions and the mold release locking portions.

In yet another aspect of the present invention, the substrate is made of glass. In this case, rigidity of the substrate can be kept even if the substrate is comparatively thin.

In yet another aspect of the present invention, the resin is light-curing resin and the first and the second molds are made of glass. In this case, light-curing resin can be efficiently cured by forming the first and the second molds by glass.

### Brief Description of Drawings

Fig. 1A is a plan view of a wafer lens, Fig. 1B is a cross-sectional view of the wafer lens illustrated in Fig. 1A taken in the arrow direction of line A-A and Fig. 1C is an enlarged cross-sectional view of an image pickup lens unit cut out of the wafer lens illustrated in Fig. 1A.
Fig. 2A is a conceptual cross-sectional view illustrating a molding device used for manufacture of a wafer lens according to a first embodiment and Fig. 2B is a conceptual plan view of a first mold and the like.
Figs. 3A to 3F are diagrams for describing manufacturing steps of the wafer lens.
Fig. 4A is a diagram for describing a relationship between an amount of displacement of first and second molds and elapsed time in the first embodiment, and Fig. 4B is a diagram for describing a relationship between an amount of displacement of first and second mold release members and elapsed time.
Fig. 5A is a diagram for describing a relationship between an amount of displacement of first and second molds and time in a second embodiment, and Figs. 5B and 5C are modifications of an operation illustrated in Fig. 5A.
Fig. 6 is a plan view illustrating a molding device according to a modification.
Fig. 7A is cross-sectional view illustrating molding device according to another modification and Fig. 7B is a cross-sectional view illustrating a molding device according to yet another modification.

### Description of Embodiments

### [First Embodiment]

With reference to drawings, a method for manufacturing a wafer lens according to a first embodiment of the present invention will be described.

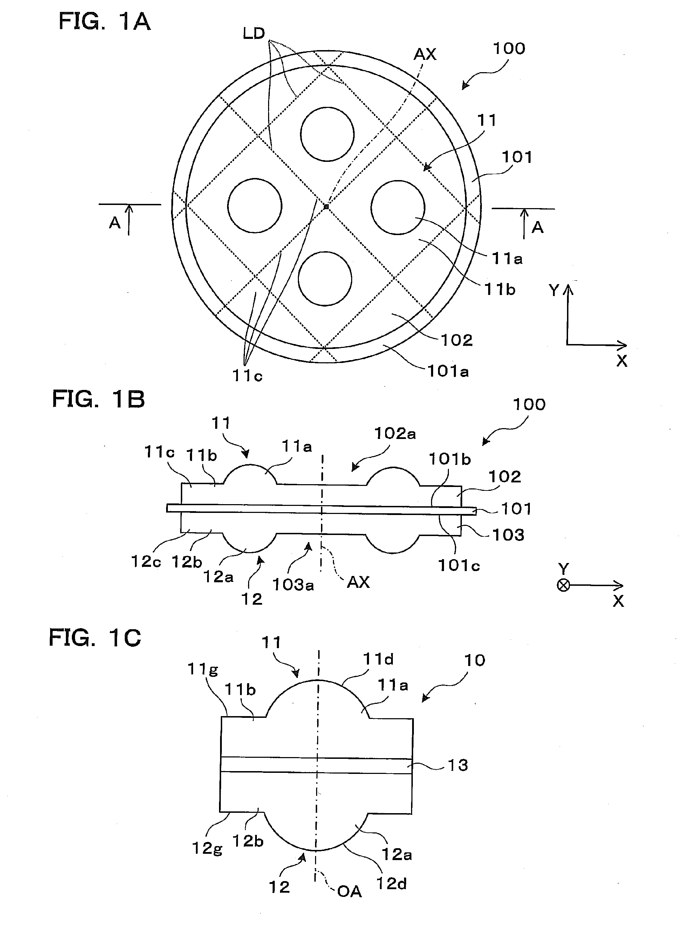

As illustrated in Figs. 1A and 1B, a wafer lens 100 is disc-shaped and includes a substrate 101, a first lens array layer 102 and a second lens array layer 103. Here, the first and the second lens array layers 102 and 103 are aligned with each other about translation in an XY plane which is vertical to an axis AX and rotation around the axis AX and are joined to the substrate 101.

The substrate 101 in the wafer lens 100 is a circular plate extending along the XY plane and is made of glass. An outer diameter of the substrate 101 is slightly larger than outer diameters of the first and the second lens array layers 102 and 103. An outer peripheral portion 101a which is exposed or projecting from these first and the second lens array layers 102 and 103 becomes a tab for supporting the substrate 101 (i.e., an extra portion for supporting) at the time of production of the wafer lens 100. The thickness of the substrate 101 is basically determined by optical specifications, and the thickness is determined such that the substrate 101 is not damaged at the time of mold release of the wafer lens 100. In particular, the thickness of the substrate 101 is, for example, equal to or greater than 0.25 mm and equal to or smaller than 1 mm.

The first lens array layer 102 is made of resin and is formed on one surface 101b of the substrate 101. The first lens array layer 102 has a circular outer shape in a plan view and a large number of first lens elements 11, each of which is constituted by a first lens body 11a and a first flange portion 11b, are arranged two-dimensionally on an XY plane on the first lens array layer 102. These first lens elements 11 are integrally molded via flat connecting portions 11c. A surface is formed on the combination of each first lens element 11 and the connecting portion 11c is a first molding surface 102a which is collectively formed by transferring. The first lens body 11a is, for example, an aspheric surface lens portion and includes a first optical surface 11d The surrounding first flange portion 11b includes a circular and flat first flange surface 11g which spreads around the first optical surface 11d, and an outer periphery of the first flange portion 11b is formed also as the connecting portion 11c. The first flange surface 11g is disposed in parallel with the XY plane which is vertical to an optical axis OA.

Similarly, the second lens array layer 103 is made of resin and is formed on the other surface 101c of the substrate 101. The second lens array layer 103 has a circular outer shape in a plan view and a large number of second lens elements 12, each of which is constituted by a second lens body 12a and a second flange portion 12b, are arranged two-dimensionally in the XY plane. These second lens elements 12 are integrally molded via flat connecting portions 12c. A surface on which each first second lens element 12 and the connecting portion 12c are combined with each other is formed as a second molding surface 103a which is collectively formed by transferring. The second lens body 12a is, for example, an aspheric surface lens portion and includes a second optical surface 12d. The surrounding second flange portion 12b includes a circular and flat second flange surface 12g which spreads around the second optical surface 12d, and an outer periphery of the second flange portion 12b is formed also as the connecting portion 12c. The second flange surface 12g is disposed in parallel with the XY plane which is vertical to the optical axis OA.

A resin material used for the formation of the first and the second lens array layers 102 and 103 is, for example, light-curing resin, thermosetting resin and the like. In particular, the light-curing resin for molding the first and the second lens array layers 102 and 103 may include acrylic resin, allyl resin, epoxy based resin and fluorine-based resin and the like and the thermosetting resin for molding the first and the second lens array layers 102 and 103 may include fluorine-based resin, silicone-based resin and the like.

The wafer lens 100 is finally cut out by dicing into a compound or composite lens 10 illustrated in Fig. 1C. Here, a dotted line LD in Fig. 1A which illustrates the wafer lens 100 before cutting out represents outer edges of a large number of compound lenses 10 disposed at lattice points. Outer sides of the compound lens 10 via a boundary of each compound lens 10 become the connecting portions 11c and 12c. The compound lens 10 is a rectangular prism-like member and has a rectangular outline when seen in the direction of the optical axis OA. The compound lens 10 includes the first lens element 11 and the second lens element 12, which have been described, and a flat portion 13 disposed therebetween. The flat portion 13 is cut out from the substrate 101. The compound lens 10 is contained in a separately prepared holder, for example, alone or in combination with another lens and is made to adhere to an image pickup circuit board as an image pickup lens. In the first lens element 11, the first lens body 11a is provided at the central portion around the optical axis OA of the compound lens 10 and has a circular outline. The first flange portion 11b extends around the first lens body 11a and has a rectangular outline. Also in the second lens element 12, the second lens body 12a is provided at about the central portion of the optical axis OA of the compound lens 10 and has a circular outline. The second flange portion 12b extends around the second lens body 12a and has a rectangular outline.

In the wafer lens 100, an aperture stop of suitable opening diameter may be provided between the substrate 101 and the first lens array layer 102 or between the substrate 101 and the second lens array layer 103. In this case, an opening of the aperture stop is disposed in alignment with each of the first and the second lens bodies 11a and 12a.

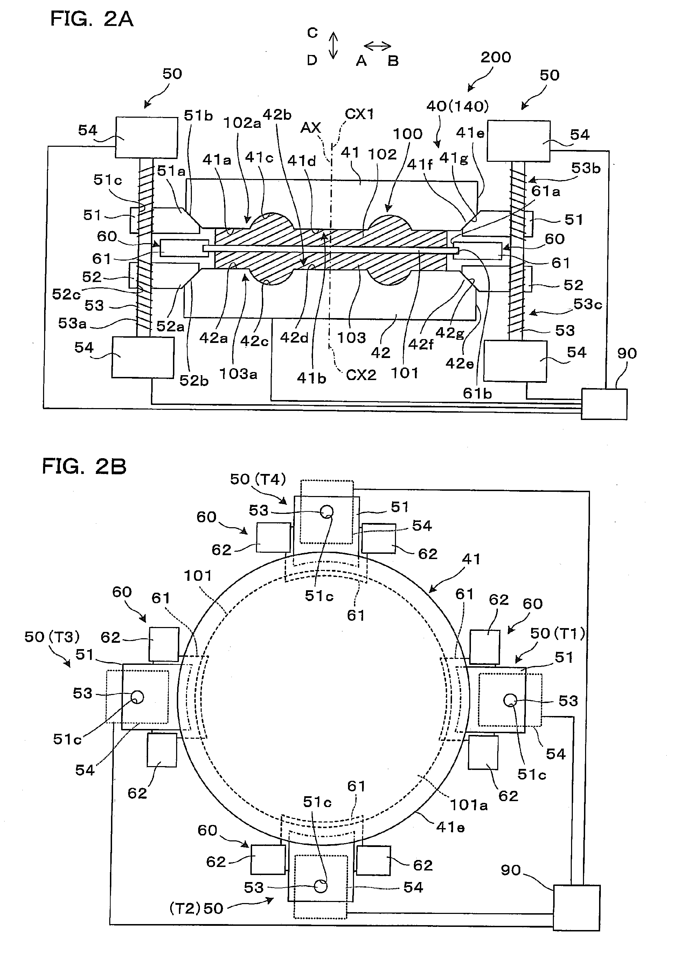

Hereinafter, an example of a lens producing device for manufacturing the wafer lens 100 illustrated in Fig. 1A and the like will be described with reference to Figs. 2A and 2B. The lens producing device includes a molding device 140 (only a mold 40 is illustrated concretely) and a mold release device 200. Among these, the lens producing device is a device for cast molding in which fluid resin is poured into the mold 40, cured and is molded. Thus, the wafer lens 100 illustrated in Fig. 1A and the like can be produced. Although not illustrated, the molding device 140 of the lens producing device includes, in addition to the mold 40 which is the main member, a mold lifting and lowering device for causing the mold 40 to perform displacement, opening and closing operations and the like, a resin coating device for applying resin to the substrate 101, a UV light generator for curing the resin, and the like. Here, the mold 40 is moved within the lens producing device, and a part thereof functions also as the mold release device 200.

In the producing device, the mold release device 200 illustrated in Figs. 2A and 2B is for taking the wafer lens 100 out of the mold 40, and includes release devices 50, support devices 60 and a control drive device 90.

As illustrated in Fig. 2A and Fig. 2B, the mold 40 includes a first mold 41 for molding the first molding surface 102a of the wafer lens 100 and a second mold 42 for molding the second molding surface 103a of the wafer lens 100. The first lens array layer 102 and the second lens array layer 103 are sequentially molded on both surfaces 101b and 101c of the substrate 101 and, at the time of mold release, as illustrated in Fig. 2A, the first mold 41 is disposed in close contact with the side of one surface 101b which is the upper side of the substrate 101 and the second mold 42 is disposed in close contact with the other surface 101c which is the lower side of the substrate 101. That is, the first mold and the second mold 42 are separated in synchronization and, immediately before and after the mold release, the first mold 41 and the second mold 42 face each other via the substrate 101. Since the plan view of the second mold 42 is the same as that of the first mold 41 illustrated in Fig. 2B, illustration thereof is omitted.

The first mold 41 is made of light transmitting glass and has a thick disc-like outer shape. The first mold 41 includes, in an end surface 41a on the substrate 101 side in a direction in which the mold release device 200 performs mold release, a first transfer surface 41b which corresponds to the first molding surface 102a of the first lens array layer 102. That is, a plurality of first transfer surfaces 41b are formed on the end surface 41a. The first transfer surface 41b includes a first optical surface transfer surface 41c for forming a first optical surface 11d and a first flange surface transfer surface 41d for forming the first flange surface 11g which are included in the first molding surface 102a.

The first mold 41 includes four mold inclined portions 41f as mold locking or engaging portions disposed at equal intervals in an outer periphery 41e on the substrate 101 side. That is, these mold inclined portions (mold locking portions) 41f are disposed at positions divided at 90 degrees about an axis CX1 of the first mold 41. The mold inclined portion 41f can be in contact with and locked on a first mold release member 51 which is attached to the first mold 41 side, included in the release device 50 which will be described later. The mold inclined portion 41f causes the first mold 41 to be displaced upward when force from the first mold release member 51 is received.

Similarly, the second mold 42 is made of light transmitting glass and has a thick disc-like outer shape. The second mold 42 includes, in an end surface 42a on the substrate 101 side, a second transfer surface 42b which corresponds to the second molding surface 103a of the second lens array layer 103. The second transfer surface 42b includes a second optical surface transfer surface 42c for forming a second optical surface 12d and a second flange surface transfer surface 42d for forming a second flange surface 12g which are included in the second molding surface 103a.

The second mold 42 includes four mold inclined portions 42f disposed as mold locking or engaging portions disposed at equal intervals in an outer periphery 42e on the substrate 101 side. That is, these mold inclined portions (mold locking portions) 42f are disposed at positions divided at 90 degrees about an axis CX2 of the second mold 42. The mold inclined portion 42f can be in contact with and locked on a second mold release member 52 which is attached to the second mold 42 side, included in the release device 50 which will be described later. The mold inclined portion 42f causes the second mold 42 to be displaced downward when force from the second mold release member 52 is received.

The mold inclined portion 41f of the first mold 41 and the mold inclined portion 42f of the second mold 42 face each other via the substrate 101 and are inclined so as to be spaced apart from the substrate 101 toward the outside in the radial direction of the first and the second molds 41 and 42, respectively. That is, the first and the second molds 41 and 42 have chamfered shapes without corners on the substrate 101 side of the outer peripheries 41e and 42e.

A total of four release devices 50 are provided and are disposed at four places on the outer peripheries 41e and 42e side of the first and the second molds 41 and 42 corresponding to a pair of mold inclined portions 41f and 42f. As a result, the four release devices 50 are disposed at equal intervals with respect to the outer peripheries 41e and 42e of the first and the second molds 41 and 42.

Each release device 50 includes a first mold release member 51, a second mold release member 52, a drive guide member 53 and motors 54. In the release device 50,the first and the second mold release members 51 and 52 are provided on the first mold 41 side and on the second mold 42 side to make a pair. Each first mold release member 51 includes a mold release inclined portion 51a which is in contact with the mold inclined portion 41f of the first mold 41 as a mold release locking portion. Here, a smooth contact surface 41g which is inclined with respect to the axis AX of the mold inclined portion (the mold locking portion) 41f or the axis CX1 and a smooth contact surface 51b of the mold release inclined portion (the mold release locking portion) 51a inclined similarly are slidably in contact with each other. Each second mold release member 52 includes a mold release inclined portion 52a which is in contact with the mold inclined portion 42f of the second mold 42 as a mold release locking portion. Here, a smooth contact surface 42g which is inclined with respect to the axis AX of the mold inclined portion (the mold locking portion) 42f or the axis CX2 and a smooth contact surface 52b of the mold release inclined portion (the mold release locking portion) 52a inclined similarly are slidably in contact with each other. At the time of mold release, the mold release inclined portions 51a and 52a of each of the mold release members 51 and 52 are locked by the corresponding mold inclined portions 41f and 42f. Then, each of the mold release members 51 and 52 is driven by the drive guide member 53 and the motors 54, which will be described later, to move in the direction spaced apart from the substrate 101 (the direction of C or the direction of D of Fig. 2A), respectively. Screw holes 51c and 52c which guide a drive guide member 53 are provided on the outside of each of the mold release members 51 and 52. The screw holes 51c and 52c include thread grooves corresponding to screw threads of the drive guide member 53.

The drive guide member 53 is a rod-shaped member constituted by two oppositely directed screws connected in series. The drive guide member 53 supports, at a central side thereof, the first and the second mold release members 51 and 52 in a displaceable manner via the screw holes 51c and 52c of a pair of the first and the second mold release members 51 and 52. An axis of rotation of the motors 54 which causes the drive guide member 53 to rotate thereabout is connected to both ends of the drive guide member 53. In a main body portion 53a of the drive guide member 53, equally-pitched but oppositely-directed screw threads 53b and 53c are formed on the first mold 41 side and on the second mold 42 side, respectively, with the center of the main body portion 53a as a border. That is, the screw thread 53b on the first mold 41 side is screwed in the thread groove of the screw hole 51c of the first mold release member 51 and causes, by clockwise rotation, the first mold release member 51 to move upward, i.e., in the direction C, and the screw thread 53c on the second mold 42 side is screwed in the thread groove of the screw hole 52c of the second mold release member 52 and causes, by clockwise rotation, the second mold release member 52 to move downward, i.e., in the direction D.

The motors 54 cause the first and the second mold release members 51 and 52 to be displaced in opposite directions via the drive guide member 53 at the same speed and in the same step amount. Displacement of the first and the second mold release members 51 and 52 can be adjusted by adjusting the rotational speed and the number of rotation of the motors 54. The control drive device 90 illustrated in Fig. 2B can individually adjust the number of rotation and the rotational speed of each motor 54.

A total of four support devices 60 are provided and are disposed at four places corresponding to the release devices 50 on the outer periphery side of the substrate 101 so as not to interfere with the release devices 50. The support devices 60 are disposed at equal intervals with respect to the outer periphery of the substrate 101 and support the substrate 101 from the circumference in a well-balanced manner.

Each support device 60 includes a support member 61 and chuck members 62. In the support device 60, the support member 61 includes a recessed portion 61b on a side surface 61a on the substrate 101 side. The support members 61 reliably support the substrate 101 from the circumference with a part of the outer peripheral portion 101a of the substrate 101 being inserted in each of the recessed portions 61b.

As illustrated in Fig. 2B, in the support member 61, chuck members 62 are provided so as to hold, from above and below, portions which are exposed or projecting from the first and the second molds 41 and 42 in the transverse direction. The chuck members 62 are supported in midair by unillustrated supports so as not to interfere with the release devices 50. In an operating state, the chuck members 62 hold the support member 61 and stably fix the substrate 101 via the support member 61. In a non-operating state, the chuck members 62 release the hold of the support member 61 and retract, enabling conveying in and out of the substrate 101.

In Figs. 2A and 2B, the release devices 50 and the support devices 60 are provided on the same line in the radial direction of the first and the second molds 41 and 42, but may be provided on different lines.

The control drive device 90 controls the entire mold release device 200, such as operations of the release devices 50 and operations of the support devices 60, for the mold release of the wafer lens 100 and for the mold release of the first mold 41 and the second mold 42. The first and the second molds 41 and 42 driven by the control drive device 90 are movable in a vertical direction CD (see Fig. 2A) and are conveyable in a horizontal AB direction and the vertical direction CD by an unillustrated conveying device.

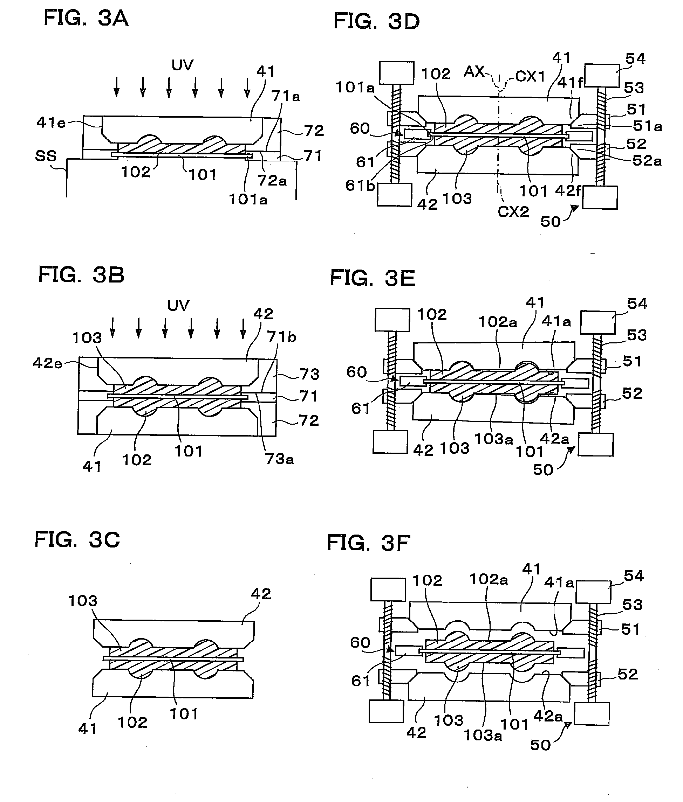

Hereinafter, a manufacturing process of the wafer lens 100 illustrated in Fig. 1A and other drawings will be described with reference to Figs. 3A to 3F. Generally, the manufacturing process of the wafer lens 100 is constituted by a process or step of applying resin to the substrate 101 and thus molding (a molding process) and a process or step of separating the molded wafer lens 100 from the first and the second molds 41 and 42 (a mold release process).

### [Molding Process]

The molding process is performed by operating a mold lifting and lowering device, a resin coating device and a UV light generator which are not illustrated while using the first and the second molds 41 and 42.

First, the first lens array layer 102 is molded on one surface 101b of the substrate 101. In particular, as illustrated in Fig. 3A, the outer peripheral portion 101a of the substrate 101 is previously fixed by a substrate holder 71 which is attached to the mold 40. Here, since the substrate 101 is placed on a stage SS and the other surface 101c which is the lower surface is made in intimate contact with or adhere to an upper surface of the stage SS, warping of the substrate 101 is prevented. In this state, the resin coating device is operated and resin is applied to one surface 101b which is the upper surface of the substrate 101 fixed to the stage SS. The mold lifting and lowering device is operated to lower the first mold 41 toward the substrate 101 to which resin has been applied with the first mold 41 being aligned with respect to the stage SS and the like. A mold holder 72 projecting downward is previously attached to the outer periphery 41e of the first mold 41 and, in a state in which an end surface 72a of the mold holder 72 and an end surface 71a of the substrate holder 71 are in contact with each other, the resin thickness between the substrate 101 and the first mold 41, i.e., the thickness of the connecting portion 11c (the first flange portion 11b) of the first lens array layer 102 is defined. The UV light generator is operated to illuminate the first mold 41 with UV light from above so as to cure the resin disposed between one surface 101b of the substrate 101 and the end surface 41a of the first mold 41.

Next, the second lens array layer 103 is molded on the other surface 101c of the substrate 101. As illustrated in Fig. 3B, the mold lifting and lowering device is operated so that the substrate 101 and the first mold 41 are inverted in an integrated manner via the first lens array layer 102 and are fixed with the other surface 101c of the substrate 101 being on an upper side. At this time, the outer periphery the substrate 101 is fixed by the substrate holder 71 and the outer periphery of the first mold 41 is fixed by the mold holder 72. The resin coating device is operated and resin is applied to the other surface 101c of the fixed substrate 101. The mold lifting and lowering device is operated to lower the second mold 42 toward the substrate 101 to which resin has been applied with the second mold 42 being aligned with respect to the first mold 41 and the like. A mold holder 73 projecting downward is previously attached to the outer periphery 42e of the second mold 42 and, in a state in which an end surface 73a of the mold holder 73 and an end surface 71b of the substrate holder 71 are in contact with each other, the resin thickness between the substrate 101 and the second mold 42, i.e., the thickness of the connecting portion 12c (the second flange portion 12b) of the second lens array layer 103 is defined by the mold holder 73 and the like. The UV light generator is operated to illuminate the second mold 42 with UV light from above so as to cure the resin disposed between the other surface 101c of the substrate 101 and the end surface 42a of the second mold 42.

After the resin which forms the first and the second lens array layers 102 and 103 is cured, as illustrated in Fig. 3C, the substrate holder 71 is removed from the substrate 101 and the mold holders 72 and 73 are removed from the first and the second molds 41 and 42.

### [Mold Release Process]

The mold release process is performed by operating the release devices 50 and the support devices 60. In the present embodiment, a process or step of separating the first lens array layer 102 from the first mold 41 and a process or step of separating the second lens array layer 103 from the second mold 42 are performed concurrently or in parallel and at substantially the same time.

First, as illustrated in Fig. 3D, the outer peripheral portion 101a of the substrate 101 after the substrate holder 71 is removed is inserted in the recessed portions 61b of the support members 61 of the support devices 60. The substrate 101 is reliably fixed to the support devices 60 by the support members 61 and the chuck members 62 (see Fig. 2B). The mold inclined portions 41f and 42f of the first and the second molds 41 and 42 after the mold holders 72 and 73 are removed are moved so as to be spaced apart from each other together with a pair of the first and the second mold release members 51 and 52 of the release device 50 disposed between the mold inclined portions 41f and 42f. At this time, end surfaces of the mold release inclined portions 51a and 52a provided in a pair of the first and the second mold release members 51 and 52 are previously disposed opposite each other while keeping a distance which is shorter than the distance between the mold inclined portion 41f of the first mold 41 and the mold inclined portion 42f of the second mold 42. In a state in which the substrate 101 is fixed, the control drive device 90 (see Figs. 2A and 2B) is operated so that the first and the second mold release members 51 and 52 are displaced respectively upward and downward by the motor 54 and the drive guide member 53, i.e., to respectively approach the first mold 41 and the second mold 42. In this manner, each of the contact surfaces 41g and 42g of the mold inclined portions 41f and 42f and each of the contact surfaces 51b and 52b of the mold release inclined portions 51a and 52a are in contact with each other, and all the mold inclined portions 41f and 42f and the mold release inclined portions 51a and 52a are mutually locked by the urging force which is smaller than predetermined force.

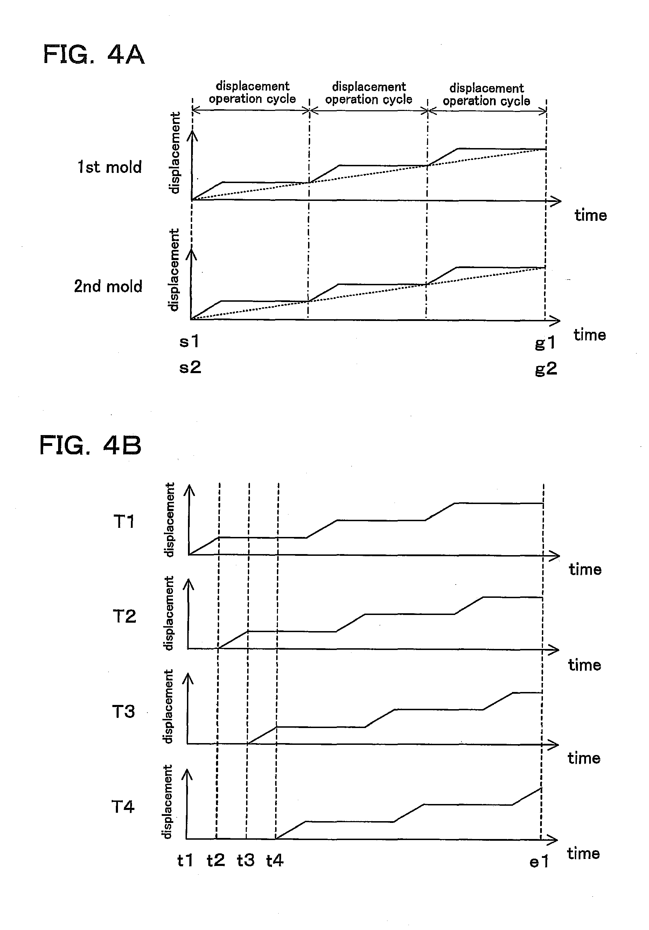

Next, as illustrated in Fig. 3E, the control drive device 90 (see Figs. 2A and 2B) is operated to displace the first and the second mold release members 51 and 52 so as to be gradually spaced apart from each other by the motor 54 and the drive guide member 53. In particular, each motor 54 at four places T1, T2, T3 and T4 is rotated sequentially and a pair of the first and the second mold release members 51 and 52 at either one of the places are spaced apart by the same distance at substantially the same time. The distance by which each of the first and the second mold release members 51 and 52 is displaced in a single displacement event is set such that an influence of the separating force (removing force) on the substrate 101 produced when the substrate 101 is separated from the first and the second molds 41 and 42 becomes the minimum. In particular, a displaced amount at a place is 1 mm, for example. In this case, as illustrated in Fig. 4A, the timing at which driving for the mold release in the first mold 41 is started (a starting point s1 of Fig. 4A) and the timing at which driving for the mold release in the second mold 42 is started (a starting point s2 of Fig. 4A) are substantially the same. As illustrated in Fig. 4B, after a pair of each of the mold release members 51 and 52 provided at the first place T1 are displaced slightly (see an operation of Fig. 4B). Subsequently, each pair of the mold release members 51 and 52 provided the adjoining second place T2, the third place T3 and the fourth place T4 is displaced sequentially by the same distance (see operations of Fig. 4B). That is, each pair of the mold release members 51 and 52 at the first to the fourth places T1, T2, T3 and T4 provided along outlines of the first and the second molds 41 and 42 starts mold release by starting at each of the starting times t1, t2, t3 and t4 and the mold release is sequentially performed along the outer peripheries 41e and 42e of the first and the second molds 41 and 42. Such a series of operations corresponds to a round of a displacement operation cycle or a round of a spacing operation cycle which causes a pair of the mold release members 51 and 52 to be gradually spaced apart. At this time, the first and the second mold release members 51 and 52 are displaced in the up-and-down vertical direction accompanying the mutual spacing and the separating force is transmitted to the first and the second molds 41 and 42 via the contact surfaces 51b and 52b. Since the first and the second mold release members 51 and 52 are displaced in a suitable range by the same distance and in the up-and-down vertical direction, the separating force transmitted to the first and the second molds 41 and 42 becomes substantially equal, the first and the second lens array layers 102 and 103 are stably separated from the first and the second molds 41 and 42.

As illustrated in Fig. 4B, when each pair of mold release members 51 and 52 provided along the outlines of the first and the second molds 41 and 42 (corresponding to the first place T1, the second place T2, the third place T3 and the fourth place T4 of Fig. 4B) is spaced apart or forced to increase space sequentially in the order along the outer peripheries 41e and 42e of the first and the second molds 41 and 42, at the time of end e1, as illustrated in Fig. 3F, the wafer lens 100 is, finally, completely separated from the first and the second molds 41 and 42. The number of times at which each pair of the mold release members 51 and 52 is displaced is determined depending on the size, the material and the like of the substrate 101, the first and the second lens array layers 102 and 103, and the first and the second molds 41 and 42. For example, if the substrate 101, the first and the second lens array layers 102 and 103, the first and the second molds 41 and 42 and the like are comparatively thick, a single round of the displacement operation cycle is performed and, if the substrate 101, the first and the second lens array layers 102 and 103, the first and the second molds 41 and 42 and the like are comparatively thin, several rounds of the displacement operation cycle are performed. Since the displacement operations of the first and the second mold release members 51 and 52 can be performed substantially at the same time at the same distance with such a method, as illustrated in Fig. 4A, the timing at which mold release in the first mold 41 is completed (an end point g1 of Fig. 4A) and the timing at which mold release in the second mold 42 is completed (an end point g2 of Fig. 4A) become substantially equal. In the foregoing, an amount of displacement illustrated by the solid line in Fig. 4A represents a relative displaced distance of the outer periphery of the first or the second mold 41 or 42 from the original reference point in the vertical direction (the direction CD) at a certain place of the first or the second mold 41 or 42, for example, near the first or the second mold release member 51 or 52 of the first place T1, and an amount of displacement illustrated by the dotted line represents a relative displaced distance of the center of the first or the second mold 41 or 42 from the reference point in the vertical direction (the direction CD). The amount of displacement illustrated in Fig. 4B represents the relative displaced distance of the first and the second mold release members 51 and 52 from the reference point. The entire first mold 41 or the entire second mold 42 moves in a constant amount of displacement for each round of the displacement operation cycle in which the four mold release members 51 and 52 perform mold release.

The wafer lens 100 produced in the method described above is cut out by dicing into a square pillar-shape with reference to the dotted line illustrated in Fig. 1A and is formed as the compound lens 10 illustrated in Fig. 1C.

According to the method for manufacturing the wafer lens 100 described above, since the second molding surface 103a is separated from the second mold 42 before the first molding surface 102a is completely separated from the first mold 41, the separating force which is the force with which each of the molds 41 and 42 are separated from each of the molding surfaces 102a and 103a is applied at the same time on the first and the second molding surfaces 102a and 103a, i.e., both surface sides, of the substrate 101 and, therefore, the force is well-balanced and uneven force is less likely to be applied to one surface 101b or the other surface 101c of the substrate 101. In this manner, it is possible to prevent damage to the substrate 101 at the time of mold release even if the substrate 101 is comparatively thin. Therefore, using a comparatively thin substrate 101 for the wafer lens 100 may increase a degree of freedom in design, may reduce the size of the product, and may produce the wafer lens 100 which has the first and second optical surfaces 11d and 12d of high performance. Since the mold release is performed with unseparated portions remaining on each of the first and the second molding surfaces 102a and 103a, the second and the first optical surfaces 12d and 11d on the opposite side of the first and the second molding surfaces 102a and 103a which are to be separated are precisely kept, respectively, and it is unnecessary to provide a support member for supporting and protecting the first and the second optical surfaces 11d and 12d and the like. In this manner, it is unnecessary to separately provide a process of protecting the first and the second optical surfaces 11d and 12d on the opposite side during the mold release, whereby a precise wafer lens 100 can be produced simply and efficiently.

### [Second Embodiment]

Hereinafter, a method for manufacturing a wafer lens according to a second embodiment will be described. The method for manufacturing a wafer lens of the second embodiment is a modification of the method for manufacturing a wafer lens of the first embodiment and, therefore, configurations not particularly described are the same as those of the first embodiment.

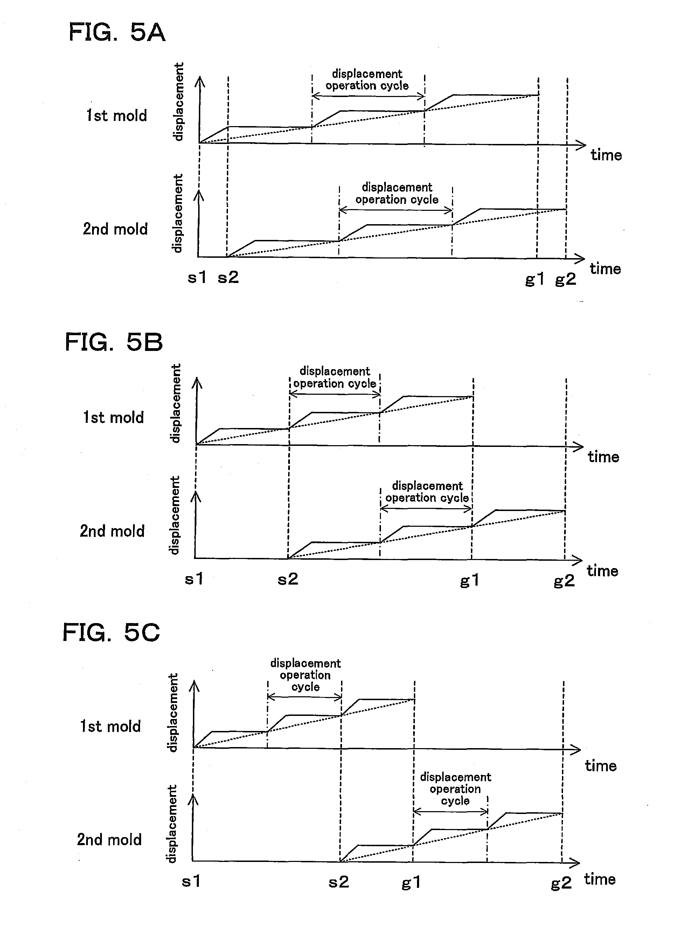

As illustrated in Fig. 5A, immediately after mold release in a first mold 41 is started (a starting point s1 of Fig. 5A), mold release in a second mold 42 is started (a starting point s2 of Fig. 5A). In particular, among a pair of first and second mold release members 51 and 52, the first mold release member 51 is displaced before the second mold release member 52 is displaced. In this manner, the second mold 42 side is separated later than the first mold 41 side. At this time, displacement is sequentially made to proceed by a group of mold release members 51 and 52 at first to fourth places T1 to T4 on outer peripheries of the first and the second molds 41 and 42. A displacement operation cycle by these mold release members 51 and 52 is repeated.

Eventually, as illustrated in Fig. 5A, after the mold release in the first mold 41 is completed (an end point g1 of Fig. 5A), the mold release in the second mold 42 is completed (an end point g2 of Fig. 5A).

In the present embodiment, as illustrated in Figs. 5B and 5C, a first-time mold release operation in the second mold 42 may be started (starting point s2 of Fig. 5A) after each displacement operation cycle of the first mold release member 51 as long as it is before the mold release in the first mold 41 is completed. The timing of starting and completing of the displacement of the second mold release member 52 can be changed suitably: for example, the displacement of the second mold release member 52 may be started during the displacement operation cycle.

Although the method for manufacturing a wafer lens according to the present embodiment and the like has been described above, the method for manufacturing a wafer lens according to the present invention is not limited to that described above. For example, in the embodiment, the shape and the size of the first and the second optical surfaces 11d and 12d can be suitably changed depending on the use or the function.

In the embodiment described above, the wafer lens 100 is not necessarily disc-shaped and may have various outlines, including an oval shape. For example, a dicing process can be simplified by molding the wafer lens 100 in a square plate shape from the beginning.

In the embodiment described above, the number of the first and the second lens elements 11 and 12 formed in the wafer lens 100 is not limited to four which is illustrated: the number may be any plural number equal to or greater than two (for example, from several tens to several thousands or greater). At this time, the first and the second lens elements 11 and 12 are preferably arranged on the lattice points for the convenience of dicing. The distance between adjoining first lens elements 11 and the distance between adjoining second lens elements 12 are not limited to those illustrated and can be suitably set in consideration of processability and the like.

Although the mold release device 200 is configured such that the first and the second molds 41 and 42 open in the up-down direction or in the vertical direction (the direction CD) in the embodiment described above, the first and the second molds 41 and 42 may be placed transversely so that an opening and closing axis extends in the left-right direction (the direction AB). In this case, the molds 41 and 42, the mold release members 51 and 52 and the like are configured to open in the left-right direction or in the horizontal direction (the direction AB).

In the embodiment described above, the directions and the pitches of the screw threads of the drive guide member 53 provided in the release devices 50 can be suitably changed depending on the situation and the driving method other than the screw mechanism may also be used.

In the embodiment described above, the areas at which the support members 61 of the support devices 60 which hold the substrate 101 are illustrative only and the size and the like of the holding areas can be suitably changed depending on the size, thickness and the like of the substrate 101.

In the embodiment described above, although the tab for supporting to which resin is not applied, such as the outer peripheral portion 101a, is provided in the substrate 101, resin may be applied to the entire surface of the substrate 101 as long as the outer periphery of the wafer lens 100 can be supported.

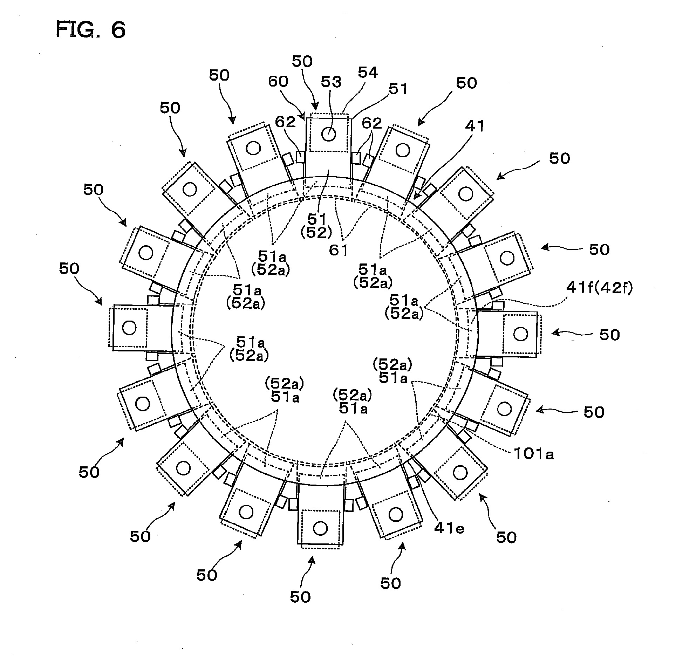

In the embodiment described above, the number, the arrangement and the like of the mold release members 51 and 52 are illustrative only and may be determined so as to uniformly separate the first and the second molds 41 and 42. At least one of the mold inclined portions 41f and 42f and the mold release inclined portions 51a and 52a may be disposed along the entire circumference of the outer peripheries 41e and 42e of the first and the second molds 41 and 42. In particular, as illustrated in Fig. 6, a large number of sets of mold release members 51 and 52 may be disposed along the entire circumference of the outer peripheries 41e and 42e of the first and the second molds 41 and 42. In this case, the mold inclined portion is, for example, continuously formed along the outer peripheries 41e and 42e of the first and the second molds 41 and 42. The number and the arrangement of the support members 61 are illustrative only and the support members 61 are not necessarily provided corresponding to the mold release members 51 and 52. It is only necessary to stably support the substrate 101 in, for example, an alternate arrangement in which the support members 61 are inserted between adjoining mold release members 51 and 52 arranged along outer edges of the molds 41 and 42.

Inclination angles of the contact surfaces 51b and 52b provided in the first and the second mold release members 51 and 52 and inclination angles of the contact surface 41g and 42g provided in the mold inclined portions 41f and 42f can also be changed. In addition, the first and the second mold release members 51 and 52 can be displaced or spaced apart independently. In this case, the first and the second molds 41 and 42 may be separated at different mold release speeds. With the difference provided in the mold release speed between the first and the second molds 41 and 42, the mold release of the second mold 42 can be started and completed during the mold release of the first mold 41 and the mold release of the first mold 41 can be started and completed during the mold release of the second mold 42.

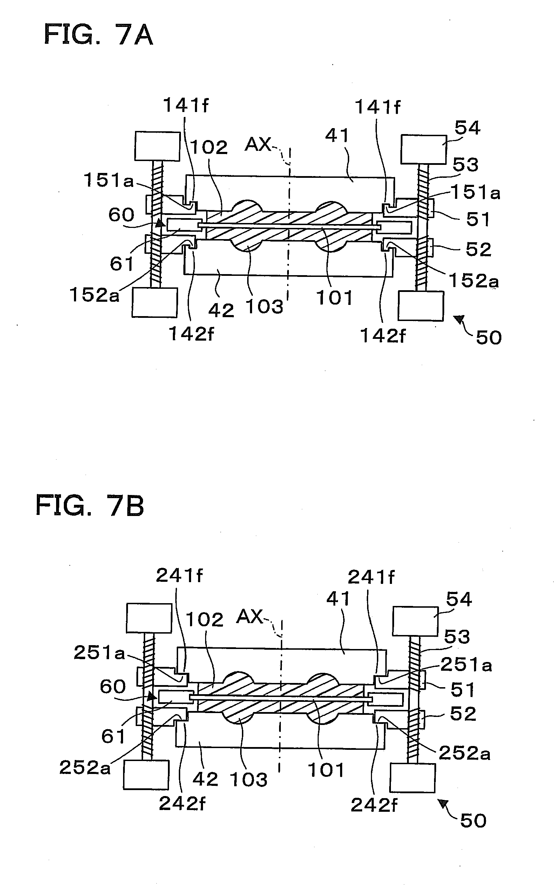

In the embodiment described above, instead of the mold inclined portions 41f and 42f and the mold release inclined portions 51a and 52a, a shape in which the first mold 41 and the first mold release member 51 mutually engage or a shape in which the second mold 42 and the second mold release member 52 mutually engage may be provided. For example, recessed portions with which the first and the second mold release members 51 and 52 engage may be provided in the first and the second molds 41 and 42. In particular, as illustrated, for example, in Fig. 7A, mold recessed portions 141f and 142f may be formed at portions corresponding to the mold inclined portions 41f and 42f and mold protruding portions 151a and 152a which fit into the mold recessed portions 141f and 142f may be formed at portions corresponding to the mold release inclined portions 51a and 52a. Further, as illustrated in Fig. 7B, mold stepped portions 241f and 242f may be formed at portions corresponding to the mold inclined portions 41f and 42f and mold flat portions 251a and 252a which fit into the mold stepped portions 241f and 242f may be formed at portions corresponding to the mold release inclined portions 51a and 52a. The mold stepped portions 241f and 242f and the mold flat portions 251a and 252a include flat surfaces which are vertical to the axis AX and therefore comparatively stable support is possible.

In the embodiment, although resin is applied to one surface 101b and the other surface 101c of the substrate 101, resin may be applied to the first and the second transfer surfaces 41b and 42b of the first and the second molds 41 and 42.

In the embodiment, a coupling agent may be previously applied to one surface 101b and the other surface 101c of the substrate 101. A mold release agent may be previously applied to the first and the second transfer surfaces 41b and 42b of the first and the second molds 41 and 42.

Although the first and the second lens array layers 102 and 103 spreads across the entire wafer lens 100 in the embodiment, the first lens array layer 102 may be divided in a unit of a lens body 11a and a flange portion 11b or the second lens array layer 103 may be divided in a unit of a lens body 12a and a flange portion 11b. In this case, although no connecting portion 11c and 12c exists, the first mold 41 and the second mold 42 can be separated from the wafer lens 100 without difficulty using the release device 50 illustrated in Fig. 2A and the like.

## Claims

1. A method for manufacturing a wafer lens which includes a substrate, a first molding surface which is molded by resin on an upper side of a first substrate surface of the substrate and has a plurality of first optical surfaces, and a second mold surface which is molded by resin on an upper side of a second substrate surface of the substrate and has a plurality of second optical surfaces, the method comprising:
a first process of applying resin to either one of the first substrate surface or a mold surface of the first mold which corresponds to the first molding surface and thus molding the first molding surface using the first mold;
a second process of applying resin to either one of the second substrate surface or a mold surface of the second mold which corresponds to the second molding surface and thus molding the second molding surface using the second mold;
a third process of separating the first mold from the first molding surface; and
a fourth process of separating the second mold from the second molding surface, wherein the start of mold release of the second mold is at the same time or after the start of mold release of first mold and before the completion of mold release of the first mold in the third process.

2. The method for manufacturing a wafer lens according to claim 1, wherein the third process and the fourth process are made to proceed at least partially in parallel.

3. The method for manufacturing a wafer lens according to claim 2, wherein mold release of the second mold is completed after mold release of the first mold is completed.

4. The method for manufacturing a wafer lens according to any one of claims 1 to 3, wherein a period from the start until completion of the third process and a period from the start until completion of the fourth process are substantially the same.

5. The method for manufacturing a wafer lens according to any one of claims 1 to 4, wherein:
each of the first and the second molds includes mold locking portions at a plurality of places in an outer periphery on the substrate side; and
in the third and fourth processes, the first mold is separated from the first molding surface and the second mold is separated from the second molding surface by causing each of mold release members attached to the first and the second molds to be brought into contact with at least a part of the mold locking portions and displacing the mold locking portions via the mold release members in a direction spaced apart from the substrate.

6. The method for manufacturing a wafer lens according to claim 5, wherein the mold locking portions of the first mold and the mold locking portions of the second mold face each other via the substrate and have contact surfaces inclined so as to be spaced apart from the substrate toward the outside in the radial direction of the first and the second molds, respectively.

7. The method for manufacturing a wafer lens according to any one of claims 5 and 6, wherein each of the mold release members includes a mold release locking portion which makes surface contact with each of the mold locking portions of the first and the second molds and transmits force.

8. The method for manufacturing a wafer lens according to claim 7, wherein at least one of the mold locking portions and the mold release locking portions are disposed at equal intervals on the outer peripheries of the first and the second molds.

9. The method for manufacturing a wafer lens according to claim 7, wherein at least one of the mold locking portions and the mold release locking portions are disposed across substantially the entire circumference along the outer peripheries of the first and the second molds.

10. The method for manufacturing a wafer lens according to any one of claims 4 to 9, wherein portions at which the mold locking portions of the first and the second molds face each other and are forced to increase spacing are sequentially moved along the outer peripheries of the first and the second molds.

11. The method for manufacturing a wafer lens according to any one of claims 1 to 10, wherein, in the third and fourth processes, the substrate is supported by a plurality of substrate support members provided on an outer periphery of the substrate.

12. The method for manufacturing a wafer lens according to claim 11, wherein the substrate support members are provided corresponding to at least one of the mold locking portions and the mold release locking portions.

13. The method for manufacturing a wafer lens according to any one of claims 1 to 12, wherein the substrate is made of glass.

14. The method for manufacturing a wafer lens according to any one of claims 1 to 13, wherein:
the resin is light-curing resin; and
the first and the second molds are made of glass.
